# EUROPÄISCHE PATENTSCHRIFT

(11) **EP 3 272 678 B1**
(45) Veröffentlichungstag und Bekanntmachung des Hinweises auf die Patenterteilung: **01.05.2019**
(21) Anmeldenummer: 16179953.1
(22) Anmeldetag: 18.07.2016
(51) Int. Cl.: B65G 1/04, B65G 1/137

(54) **KOMMISSIONIERSYSTEM UND VERFAHREN ZUR AUSLAGERUNG VON OBJEKTEN AUS EINEM KOMMISSIONIERSYSTEM**
PICKING SYSTEM AND METHOD OF REMOVAL OF OBJECTS FROM A PICKING SYSTEM
SYSTEME DE PREPARATION DE COMMANDES ET PROCEDE DE DECHARGEMENT D'OBJETS A PARTIR DU SYSTEME DE PREPARATION DE COMMANDES

(43) Veröffentlichungstag der Anmeldung: 24.01.2018
(60) Teilanmeldung: 17184271.9
(73) Patentinhaber: Riedl GmbH, 99338 Plaue (DE)
(72) Erfinder: Riedl, Markus Erich, 99338 Angelroda (DE)
(74) Vertreter: Jakelski & Althoff Patentanwälte PartG mbB

(56) Entgegenhaltungen:
- EP-A1- 0 282 785
- EP-A1- 1 218 265
- EP-A1- 1 604 921
- EP-A1- 1 980 503
- EP-A1- 2 287 092
- EP-A1- 2 428 465
- WO-A1-03/018443
- DE-A1- 19 743 793
- DE-A1-102004 058 216
- DE-A1-102005 063 197
- DE-A1-102007 016 453
- DE-A1-102011 000 481
- FR-A1- 2 641 527
- JP-A- 2013 018 611

## Beschreibung

Die vorliegende Erfindung betrifft ein Kommissioniersystem. Weiterhin betrifft sie ein Verfahren zur Auslagerung von Objekten aus einem Kommissioniersystem.

### Stand der Technik

Automatisierte Kommissioniersysteme, wie sie beispielsweise im Arzneimittelgroßhandel verwendet werden, weisen Regale mit Lagerfächern auf, in denen eine dynamische Lagerhaltung erfolgt. Objekte, wie beispielsweise Arzneimittelpackungen, werden mittels Regalbediengeräten in die Lagerfächer eingelagert und wieder aus ihnen ausgelagert. Ein derartiges Regalbediengerät ist aus der EP 2 163 507 B1 bekannt. Es verfügt über ausfahrbare Greifarme, die in ein Lagerfach hineingefahren werden können, um das Lagergut zu greifen. Durch Einfahren der Greifarme wird das Lagergut auf das Regalbediengerät gezogen. Dabei können Führungen der Greifarme verschwenkt werden, um ein besonders sicheres Greifen des Lagerguts zu gewährleisten. Mittels der Greifarme können auf dem Regalbediengerät befindliche Objekte auch wieder in Lagerfächer ausgelagert werden. Zum Transportieren der Objekte kann das Regalbediengerät horizontal und vertikal entlang eines Regals verfahren werden.

Wenn eine Bestellung einer Apotheke bei einem Großhändler eingeht, so müssen alle bestellten Medikamentenpackungen und sonstigen Objekte aus den Lagerfächern ausgelagert und in Verpackungsbehälter eingelagert werden. Hierzu können die Objekte vom Regalbediengerät auf einem parallel zu dem Regal verlaufenden Förderband platziert werden. Das Förderband transportiert die Objekte dann in einen Verpackungsbehälter. Dieses Vorgehen hat allerdings den Nachteil, dass zunächst alle Objekte einer einzigen Bestellung zusammengestellt werden müssen, bevor die nächste Bestellung bearbeitet werden kann. Selbst dann wenn mehrere Regalbediengeräte vorhanden sind, ist ein paralleles Auslagern von Objekten unterschiedlicher Bestellungen nicht möglich. Dies führt zu einem langsamen Abarbeiten der Bestellungen.

Weiterhin ist es bekannt, neben Regalbediengeräten auch weitere Hilfsmittel zum Entnehmen der Objekte aus den Lagerfächern vorzusehen. So beschreibt die EP 2 428 465 A1 ein Regallager gemäß dem Oberbegriff des Anspruchs 1, in dem auf einer Längsseite eines Regals Regalbediengeräte angeordnet sind. Auf der anderen Längsseite sind Lifteinheiten dazu vorgesehen, Objekte aus Lagerfächern zu entnehmen. Diese Lifteinheiten ermöglichen den Weitertransport der Objekte mittels Fördertechniken.

Die DE 10 2007 016 453 A1 offenbart ein automatisiertes Kommissioniersystem mit einem ähnlichen Aufbau. Auf einer Längsseite eines Lagerregals sind Regalbediengeräte angeordnet. Auf der anderen Längsseite sind Vertikallifte dazu vorgesehen, Objekte aus Lagerfächern zu entnehmen. Jeder Vertikallift ist an ein Zentralförderband gekoppelt.

In der EP 2 287 092 A1 wird ein Regallager beschrieben, in welchem Regale von einer Seite vollautomatisiert mittels Regalfahrzeugen befüllt werden und von der anderen Seite halbautomatisiert mittels Entnahmefahrzeugen gelehrt werden. Hierzu tragen die Entnahmefahrzeuge jeweils einen Bediener, der die Objekte aus den Regalen entnimmt.

Zum Leeren eines Regallagers wird in der WO 01/23281 A1 vorgeschlagen, die Objekte auf Produktträgern abzulegen. Ein Regalbediengerät weist einen Betätigungsfinger auf, mit dem es in eine Ausnehmung eines Produktträgers eingreifen kann. So kann der Produktträger zusammen mit den darauf gelagerten Objekten auf das Regalbediengerät gezogen werden.

Ein Regallager, das in der WO 03/018443 A1 beschrieben wird, weist in seinen Regalfächern jeweils einen Schieber auf. Dieser kann von einem Regalbediengerät so betätigt werden, dass Objekte aus einem Regalfach herausgeschoben werden. Wenn diese sich über den Rand des Regalfachs hinausbewegen, werden sie entweder auf das Regalbediengerät geschoben oder fallen auf ein darunter befindliches Förderband.

Falls unterschiedlichste Bestellungen eingehen, müssen alle zu einer Bestellung gehörenden Objekte aus den Lagerfächern ausgelagert und in Versandbehältern pro Kunde getrennt bereit gestellt werden. Je nach Branche kann es dabei vorkommen, dass bei Waren mit begrenzter Haltbarkeit FEVO (First Expiry First Out) und/oder FIFO (First In First Out) -Regeln einzuhalten sind, die einen Einfluss auf die Organisation der Ablage der Objekte auf den Lagerfächern haben kann. Unabhängig von den unterschiedlichen Anforderungen an Auftragsstruktur und Zeitablauf bei der Bearbeitung müssen die ausgelagerten Objekte im zeitlichen Mittel wieder eingelagert und nachgefüllt werden können, damit die Lieferfähigkeit aufrecht erhalten bleibt.

Bei Handelsbetrieben mit kontinuierlichem Betrieb ist es erforderlich, dass die Auslagerleistung sich im Tagesverlauf flexibel kontinuierlich an die Kundenbestellungen anpassen kann, damit kein Stau von Kundenbestellungen entsteht. Hierzu muss die Gesamteinrichtung so ausgelegt sein, dass bei Bedarf ein hoher Auslagerungsdurchsatz gefahren werden kann. Dabei kann die Auftragsstruktur stark variieren, indem beispielsweise sehr viele Aufträge mit wenigen einzelnen Artikeln vorkommen wie auch Aufträge mit mehreren bis vielen Objekten für eine überschaubare Anzahl von Kunden.

Branchenbedingt kann die Anforderung bestehen, eingehende Bestellungen binnen einer kurzen, definierten Zeitspanne in einem Peak-Leistungsbetrieb durchzuführen. Dabei gilt es, die Verpackungsbehälter-Durchlaufzeit an der Regaleinheit möglichst gering zu halten. Hierzu können die Objekte von Regalbediengeräten im ersten Ansatz auf einem parallel zu dem Regal verlaufenden Förderband platziert werden. Das Förderband transportiert die Objekte dann in einen Verpackungsbehälter. Dieses Vorgehen hat allerdings den Nachteil, dass zunächst alle Objekte einer einzigen Bestellung zusammengestellt werden müssen, bevor die nächste Bestellung bearbeitet werden kann.

Die Limitierungen dieser einfachen Anordnung können umgangen werden, indem einem Regalbediengerät ein oder mehrere aktive Puffer zugeordnet sind, die typischerweise als kurzes Förderband Objekte zwischenpuffern und einem in Längsrichtung beispielsweise zwischen zwei Regaleinheiten verlaufenden Förderband zuführen. Diesem Förderband werden dann Sektionen zugeordnet, auf denen die Objekte für einen Kunden zusammengefasst werden. Die Limitierung besteht hierbei darin, dass eine Zugabe von Objekten von den kurzen quer dazu angeordneten Pufferbändern auf ein schneller laufendes Förderband dazu führt, dass eine breite Sektion benutzt werden muss, um mit Sicherheit genügend Abstand zwischen den Aufträgen für die unterschiedlichen Kunden zu haben. Alternativ besteht die in Längsrichtung transportierende Fördereinrichtung aus mehreren Förderbändern. Auch erlauben die in Längsrichtung verwendeten Förderbänder nicht die sichere Abgabe von runden Dosen, die beim seitlichen Einwerfen auf das Hauptförderband umfallen und dann undefiniert rollen können, wenn nicht sehr spezielle Förderbänder eingesetzt werden. Die zeitliche Limitierung eines solchen Kommissioniersystems ist durch die Förderband-Sektionslänge geteilt durch die mittlere Bandgeschwindigkeit gegeben. Diese liegt üblicherweise im Bereich von 1,0 bis 1,5 m/s.

Die EP 0 282 785 A1 beschreibt ein Kommissioniersystem, in dem kleine Objekte durch Schächte in Behälter gefüllt und dann mittels eines Förderbandes weitertransportiert werden.

Es ist daher eine Aufgabe der vorliegenden Erfindung, ein Kommissioniersystem bereitzustellen, dem gleichzeitig Objekte mehrerer Bestellungen entnommen werden können, um so ein schnelles Bearbeiten der Bestellungen zu ermöglichen. Hierbei soll ein einfaches Entnehmen der Objekte aus einem Regal ermöglicht werden. Eine weitere Aufgabe der vorliegenden Erfindung besteht darin, ein Verfahren bereitzustellen, welches die schnelle Auslagerung von Objekten aus dem Kommissioniersystem ermöglicht.

### Offenbarung der Erfindung

Das erfindungsgemäße Kommissioniersystem weist mindestens ein Regal auf, welches über mehrere Lagerfächer verfügt. Unter einem Regal wird eine von der Umgebung abgegrenzte, in der Regel geschlossene Einheit verstanden. Diese weist einen Rahmen auf, der mindestens auf einer Seite die Aufnahme von in Längsrichtung horizontalen Lagerfachböden vorsieht, die vertikal übereinander mit gleichem oder unterschiedlichem Abstand angeordnet sind und Lagerfläche für Objekte bereitstellen. Mindestens ein Regalbediengerät ist parallel zu zumindest einem Abschnitt des Regals verfahrbar angeordnet. Es ist eingerichtet, um Objekte in den Lagerfächern abzulegen und aus den Lagerfächern zu entnehmen. Wenn mehrere Regalbediengeräte auf der ersten Führungsschiene angeordnet sind, so können diese abschnittsweise hintereinander liegende Bereiche des Regals bedienen. Unter einem Regalbediengerät wird eine Vorrichtung verstanden, die dazu eingerichtet ist, um Objekte in das Regal einzulagern und wieder aus dem Regal auszulagern. Ein Regalbediengerät kann insbesondere ein Achssystem und einen Greifer aufweisen. Das Achssystem positioniert den Greifer in geeigneter Höhe vor Lagerfachböden des Regals und lagert vorzugsweise mittels Greifarmen Objekte auf Lagerfachböden oder holt diese von dort wieder ab. Weiterhin weist das Kommissioniersystem mehrere Speicherfächer auf. Diese sind eingerichtet, um von dem Regalbediengerät befüllt zu werden. Mindestens ein Transportgerät ist eingerichtet, um einem Speicherfach alle darin enthaltenen Objekte zu entnehmen.

In den Speicherfächern können Objekte, die verpackt werden sollen, zwischengelagert werden, bis sie von einem Transportgerät abgeholt werden. Vorzugsweise sind mehrere Transportgeräte vorgesehen, so dass in kurzem zeitlichem Abstand Speicherbehälter, die Objekte für unterschiedliche Bestellungen lagern, entleert werden können.

Das Kommissioniersystem weist mindestens eine erste Führungsschiene auf, die parallel zu zumindest einem Abschnitt des Regals angeordnet ist. Das mindestens eine Regalbediengerät ist entlang dieser ersten Führungsschiene verfahrbar angeordnet. Weiterhin weist es eine zweite Führungsschiene auf, entlang welcher das Transportgerät verfahrbar angeordnet ist.

Die zweite Führungsschiene ist vorzugsweise in sich geschlossen. Dies bedeutet, dass sie kein Ende aufweist, sondern beispielsweise in Form eines Ovals geführt ist. Bei Verwendung mehrerer Transportgeräte können die Transportgeräte dadurch stets in dieselbe Richtung fahren, dabei Speicherfächer entleeren, deren Inhalt in einem Ausgabebereich abliefern und wieder an den Anfang des Kommissioniersystems zurückkehren, ohne sich dabei gegenseitig zu behindern.

Weiterhin ist es bevorzugt, dass die zweite Führungsschiene mindestens einen Transferbereich aufweist. In diesem ist ein Abschnitt der zweiten Führungsschiene so ausgebildet, dass er aus der zweiten Führungsschiene entfernt werden kann. Dabei kann er durch einen parallel zu der zweiten Führungsschiene angeordneten Ersatzabschnitt derselben Länge ersetzt werden. Dies kann beispielsweise dadurch realisiert werden, dass der Abschnitt, welcher sich in der zweiten Führungsschiene befindet und der Ersatzabschnitt, welcher sich außerhalb der zweiten Führungsschiene befindet, gleichzeitig so verschoben werden, dass am Beginn des Verschiebevorgangs der Abschnitt die zweite Führungsschiene verlässt und am Ende des Verschiebevorgangs der Ersatzabschnitt die vorherige Position des Abschnitts einnimmt. Dieser Verschiebevorgang kann auch in umgekehrter Richtung durchgeführt werden. Wenn vor Beginn des Verschiebevorgangs ein Transportgerät auf dem Ersatzabschnitt positioniert wird, so kann es auf diese Weise in die in sich geschlossene zweite Führungsschiene eingeschleust werden. Hierdurch kann die Anzahl der Transportgeräte auf der zweiten Führungsschiene erhöht werden. Wenn sich vor Beginn des Verschiebevorgangs ein Transportgerät auf dem Abschnitt befindet, der ein Teil der in sich geschlossenen ersten Führungsschiene ist, so kann es aus der zweiten Führungsschiene ausgeschleust werden. Dies kann sinnvoll sein, um Reparaturen an dem Transportgerät vorzunehmen.

Das Kommissioniersystem weist einen Abschnitt auf, in dem die mindestens eine erste Führungsschiene parallel zu der zweiten Führungsschiene verläuft. Zwischen diesen Führungsschienen ist ein Regal angeordnet, das mindestens ein Speicherfach und mehrere Lagerfächer enthält. Wenn es mehrere Speicherfächer enthält, so sind diese vorzugsweise alle auf derselben Ebene des Regals angeordnet, so dass sie problemlos von einem entlang der zweiten Führungsschiene fahrenden Transportgerät entleert werden können. Die weiteren Ebenen des Regals können für Lagerfächer genutzt werden. Auf der von der zweiten Führungsschiene abgewandten Seite der ersten Führungsschiene kann ein weiteres Regal angeordnet sein, dass keine Speicherfächer, jedoch weitere Lagerfächer aufweist. Außerdem kann dieses weitere Regal einen Bedienbereich aufweisen, über den von einem Benutzer Objekte in das Kommissioniersystem eingeführt werden können. Diese Objekte können von dem Regalbediengerät anschließend gegriffen und in einem der Lagerfächer abgelegt werden. Alternativ verläuft in dem Abschnitt die zweite Führungsschiene in dem Regal, das mindestens ein Speicherfach und mehrere Lagerfächer enthält.

In einer anderen Ausführungsform des Kommissioniersystems sind die Speicherfächer nicht in einem Regal angeordnet. Stattdessen sind Einrichtungen vorgesehen, in welchen Objekte von dem mindestens einen Regalbediengerät abgelegt werden können und welche die Objekte dann in die Speicherfächer weitertransportieren. Bei den Einrichtungen kann es sich um aktiv transportierende Einrichtungen, wie insbesondere Förderbänder, oder um passiv transportierende Einrichtungen, wie insbesondere Rutschen, handeln. Die Anordnung der Speicherfächer außerhalb eines Regals ermöglicht große Freiheiten bei der Anordnung der zweiten Führungsschiene. Es kann auch vorgesehen sein, die Speicherfächer zwischen zwei Regalen anzuordnen, die jeweils von mindestens einem Regalbediengerät bedient werden, so dass die Regalbediengeräte beider Regale einen gemeinsamen Satz von Speicherfächern zum Zwischenlagern von Objekten verwenden können.

Das mindestens eine Regalbediengerät ist vorzugsweise eingerichtet, um über WLAN (Wireless Local Area Network) zu kommunizieren. Weiterhin ist es bevorzugt, dass die erste Führungsschiene als Energieschiene ausgeführt ist, welche das Regalbediengerät mit elektrischer Energie versorgt. Hierdurch wird keine Schleppkette für das Regalbediengerät benötigt. Die Kapazität des Kommissioniersystems kann so über die Anlagenlänge skaliert werden und es können beliebig lange Kommissioniersysteme gebaut werden. Außerdem können mehrere Regalbediengeräte auf der gleichen ersten Führungsschiene fahren, wobei jedem ein Arbeitsbereich zugewiesen wird. Regalbediengeräte können einfach austauscht werden oder es können weitere Regalbediengeräte hinzufügt werden, wenn die Auslagerleistung erhöht werden soll. Hierbei können die Arbeitsbereiche dynamisch neu zugewiesen werden.

Das Transportgerät ist eingerichtet, um einen Boden eines Speicherfachs so zu verschieben, dass in dem Speicherfach befindliche Objekte in das Transportgerät fallen. Dies ermöglicht ein einfaches Entleeren der Speicherfächer in das Transportgerät. Das Transportgerät erstreckt sich hierzu unter die Speicherfächer. Damit das Transportgerät Objekte aus Speicherfächern mehrerer Regale entnehmen kann, ist die zweite Führungsschiene in einer Ausführungsform des Kommissioniersystems zwischen zwei parallel verlaufenden Regalen angeordnet. Hierbei erstreckt sich das Transportgerät insbesondere unter die Speicherfächer beider Regale, so dass aus beiden Regalen Objekte in das Transportgerät überführt werden können. In einer anderen Ausführungsform verläuft ein Abschnitt der zweiten Führungsschiene in einem Regal, das mindestens ein Speicherfach und mehrere Lagerfächer enthält. Ein zweites derartiges Regal ist zu diesem parallel angeordnet. Rutschen verlaufen von den Speicherfächern des zweiten Regals zu dem ersten Regal, so dass ihr Inhalt in ein Transportgerät entleert werden kann, das sich entlang der zweiten Führungsschiene bewegt.

Das Verschieben des Bodens erfolgt vorzugsweise mittels einer Klappe an einer Seite des Transportgeräts, die auch zum Entleeren des Transportgeräts vorgesehen ist. Auf diese Weise kann zum Verschieben des Bodens ein bereits vorhandenes Bauteil des Transportgeräts genutzt werden, so dass dieses eine möglichst einfache Konstruktion aufweist. Während ein Entleeren des Transportgeräts erst durch ein weites Öffnen der Klappe erfolgt, kann ein Verschieben des Bodens bereits durch ein geringfügiges Öffnen der Klappe erfolgen, wobei die Klappe als Mitnahmeeinrichtung fungiert.

Weiterhin ist es bevorzugt, dass mindestens ein Speicherfach so neben einem Ablagebereich angeordnet ist, dass in dem Ablagebereich befindliche Objekte mittels des Regalbediengeräts in das Speicherfach verschiebbar sind. Auf diese Weise können zusätzlich zu den Speicherfächern auch die Ablagebereiche genutzt werden, um darin zum Versand vorgesehene Objekte zwischenzulagern. Wenn der Boden eines Speicherfachs von einem Transportgerät geöffnet wird, dann können bei geöffnetem Boden alle Objekte, die sich in dem angrenzenden Ablagebereich befinden mittels des Regalbediengeräts in das Speicherfach hinübergeschoben werden, so dass sie durch den offenen Boden in das Transportgerät fallen und gemeinsam mit den im Speicherfach abgelegten Objekten vom Transportgerät weitertransportiert werden können.

Das Kommissioniersystem weist vorzugsweise weiterhin mehrere Speicherbehälter auf. Das Transportgerät ist eingerichtet, um seinen Inhalt in einen der Speicherbehälter zu entleeren. Während die Speicherfächer die Aufgabe haben, von einem Regalbediengerät abgelegte Objekte so lange zu sammeln, bis sie von einem Transportgerät weitertransportiert werden, dienen die Speicherbehälter dazu, alle Objekte, die in einen Verpackungsbehälter verpackt werden sollen, bis zum endgültigen Befüllen des Verpackungsbehälters zwischenzulagern. Das Volumen der Speicherbehälter entspricht deshalb vorzugsweise mindestens dem Volumen der im Kommissioniersystem verwendeten Verpackungsbehälter. Unter Verpackungsbehältern werden sowohl endgültige Versandbehälter verstanden als auch interne Verpackungsbehälter eines Handelsbetriebs, in denen pro Kunde zusammengefasst ausgelagerte Objekte der Verpackungsabteilung des Handelsbetriebs zugeführt werden.

In einer bevorzugten Ausführungsform des Kommissioniersystems weisen die Speicherbehälter jeweils einen Schacht auf, in dem mehrere Böden verfahrbar angeordnet sind. Dabei sind die Böden in einer Lagerposition auf einer Seite eines Transportmittels nach unten verfahrbar angeordnet sind und in einer Transportposition auf der anderen Seite des Transportmittels nach oben verfahrbar angeordnet. Die Lagerposition ist zur Aufnahme von Objekten geeignet. Hierzu befinden sich die Böden in der Lagerposition insbesondere in einer horizontalen Anordnung oder in einer Anordnung, die maximal um 45° von der Horizontalen abweicht. Die Transportposition muss nicht zur Aufnahme von Objekten geeignet sein, so dass die Böden in der Transportposition im Wesentlichen vertikal herabhängen können. Dies ermöglicht einen platzsparenden Transport der Böden entlang einer Schachtwand nach oben.

In dem Schacht kann ein erster Boden so in seiner Lagerposition angeordnet sein, dass Objekte aus dem Ausgabebereich auf den ersten Boden gelangen können. Wenn dieser befüllt ist, so kann er nach unten verfahren werden und ein zweiter Boden kann so in seine Lagerposition gebracht werden, dass er aus dem Ausgabebereich mit Objekten befüllt werden kann. Dabei verbleibt der erste Boden zunächst in seiner Lagerposition. Wird er weiter nach unten verfahren, so wechselt er in seine Transportposition, wodurch er die auf ihm liegenden Objekte nicht mehr tragen kann. Diese fallen dann im Schacht hinab und können so in einen unter dem Schacht positionierten Verpackungsbehälter gelangen. Der zweite Boden verbleibt dabei in seiner Lagerposition und kann weiterhin Objekte aufnehmen. Diese Ausführungsform des Kommissioniersystems ermöglicht es also, die Ausgabe einer Gruppe von Objekten in einem Speicherbehälter zurückzuhalten, während dieser bereits mit einer zweiten Gruppe von Objekten befüllt wird.

Bei dem Transportmittel kann es sich insbesondere um eine Gruppe von mehreren parallel verlaufenden Bändern oder Ketten handeln, an welchen die Böden befestigt sind. Bei einem Paar von zwei parallel verlaufenden Bändern oder Ketten kann die Befestigung beispielsweise an zwei Enden einer Bodenkante erfolgen. Die Befestigung erfolgt dabei insbesondere so, dass die Böden in Ihrer Transportposition, der Schwerkraft folgend, herabhängen können. Wenn sie das obere Ende des Transportmittels erreichen gelangen sie von der zweiten Seite des Transportmittels auf seine erste Seite. Dabei klappen sie in die Transportposition um, in der sie im Wesentlichen in einer horizontalen Anordnung blockiert werden. Diese Blockade wird am unteren Ende des Transportmittels aufgehoben, so dass die Böden in eine vertikale Anordnung umklappen können und dabei alle Objekte freigeben, die auf ihnen abgelegt waren.

Das Kommissioniersystem weist weiterhin vorzugsweise ein Fördermittel auf, auf dem Verpackungsbehälter transportierbar sind. Das Fördermittel kann insbesondere ein Rollenförderer sein. Die Speicherbehälter sind so angeordnet, dass sie in die Verpackungsbehälter entleerbar sind. Dies kann beispielsweise so realisiert werden, dass das Fördermittel die Verpackungsbehälter in einer ersten Ebene transportiert und die Speicherbehälter darüber in einer zweiten Ebene angeordnet sind. Durch Kippen der Speicherbehälter oder durch Öffnen des Bodens der Speicherbehälter kann deren Inhalt durch die offene Oberseite der Verpackungsbehälter in diese hineingeschüttet werden. Anschließend können die befüllten Verpackungsbehälter mittels des Fördermittels zum Versand weitertransportiert werden und leere Verpackungsbehälter können unter den Speicherbehältern positioniert werden.

Das Verfahren zur Auslagerung von Objekten aus einem Kommissioniersystem, insbesondere aus dem erfindungsgemäßen Kommissioniersystem, umfasst das Entnehmen mindestens eines Objektes aus einem Lagerfach des Kommissioniersystems mittels eines Regalbediengeräts. Das mindestens eine Objekt wird in einem Speicherfach des Kommissioniersystems abgelegt. Anschließend wird ein Transportgerät so an das Speicherfach heran verfahren, dass es sich unter das Speicherfach erstreckt und das Speicherfach wird in das Transportgerät entleert indem das Transportgerät einen Boden des Speicherfachs so verschiebt, dass in dem Speicherfach befindliche Objekte in das Transportgerät fallen. Das Transportgerät wird zu einem Ausgabebereich verfahren und in den Ausgabebereich entleert.

Um nicht nur Objekte, die in einem Speicherfach abgelegt sind, sondern auch Objekte, die in einem angrenzenden Ablagebereich abgelegt sind, in das Transportgerät befördern zu können, ist es bevorzugt, dass beim Entleeren des Speicherfachs mindestens ein Objekt aus einem Ablagebereich mittels Greifarmen des Regalbediengeräts in das Transportgerät geschoben wird. Hierzu genügt es, die Greifarme in den Ablagebereich hinein auszufahren und dann in das Speicherfach hinüber zu bewegen. Dabei werden in dem Ablagebereich befindliche Objekte so lange über den Boden des Ablagebereiches geschoben, bis sie in das Speicherfach gelangen und von dort in das Transportgerät weiterbewegt werden. Ein Greifen der einzelnen Objekte im Ablagebereich mittels des Regalbediengeräts ist nicht notwendig, wodurch sich der Verschiebevorgang sehr schnell durchführen lässt.

Um die Anzahl der Transportvorgänge mittels des Transportgeräts möglichst gering zu halten, ist es bevorzugt, dass mehrere Speicherfächer in das Transportgerät entleert werden, bevor das Transportgerät in den Ausgabebereich entleert wird. Hierzu ist es bevorzugt, dass das Aufnahmevolumen des Transportgeräts größer ist als das Aufnahmevolumen eines Speicherfachs.

Der Ausgabebereich kann im einfachsten Fall ein Bereich sein, dem die dort von einem Transportgerät abgelegten Objekte zur weiteren Verwendung manuell entnommen werden müssen. Um möglichst viele Schritte des Verfahrens automatisiert durchführen zu können, ist es jedoch bevorzugt, dass in dem Ausgabebereich mehrere Speicherbehälter angeordnet sind. Jedes Transportgerät wird in einen der Speicherbehälter entleert. Weiterhin ist es bevorzugt, dass ein Speicherbehälter in einen Verpackungsbehälter entleert wird, nachdem ein oder mehrere Transportgeräte in den Speicherbehälter entleert wurden. Auf diese Weise ist es nicht notwendig einen Verpackungsbehälter so lange im Ausgabebereich vorzuhalten, bis er gegebenenfalls nacheinander von mehreren Transportgeräten befüllt wurde. Vielmehr wird der gesamte für einen Verpackungsbehälter vorgesehene Inhalt zunächst in einem Speicherbehälter gesammelt und erst dann in einen Verpackungsbehälter entleert, wenn er vollständig zusammengestellt worden ist. Auf diese Weise können in schneller Folge leere Verpackungsbehälter in das Kommissioniersystem hinein transportiert werden und befüllt wieder aus dem Kommissioniersystem entfernt werden. Somit ermöglicht das Verfahren einen schnellen Versand von Bestellungen, deren Inhalt aus den Lagerfächern entnommen wurde.

### Kurze Beschreibung der Zeichnungen

Ausführungsbeispiele der Erfindung sind in den Zeichnungen dargestellt und werden in der nachfolgenden Beschreibung näher erläutert.
- Fig. 1: zeigt schematisch eine Aufsicht auf ein Kommissioniersystem gemäß einem Ausführungsbeispiel der Erfindung.
- Fig. 2: zeigt schematisch eine Aufsicht auf ein Regalbediengerät, welches in dem Kommissioniersystem gemäß Fig. 1 verwendet wird.
- Fig. 3: zeigt eine schematische Seitenansicht eines Regals aus dem Kommissioniersystem gemäß Fig. 1.
- Fig. 4: zeigt eine schematische Seitenansicht eines anderen Regals aus dem Kommissioniersystem gemäß Fig. 1.
- Fig. 5: zeigt eine schematische Schnittseitenansicht eines Bereiches des Kommissioniersystems gemäß Fig. 1, in dem Objekte in Verpackungsbehälter verpackt werden.
- Fig. 6a: zeigt eine schematische Schnittseitenansicht eines Speicherbehälters in einem Ausführungsbeispiel des Kommissioniersystems gemäß Fig. 1.
- Fig. 6b: zeigt eine schematische Schnittseitenansicht des Speicherbehälters gemäß Fig. 6a mit einer anderen Anordnung seiner Böden.
- Fig. 6c: zeigt eine schematische Schnittseitenansicht des Speicherbehälters gemäß Fig. 6a mit noch einer anderen Anordnung seiner Böden.

### Ausführungsbeispiele der Erfindung

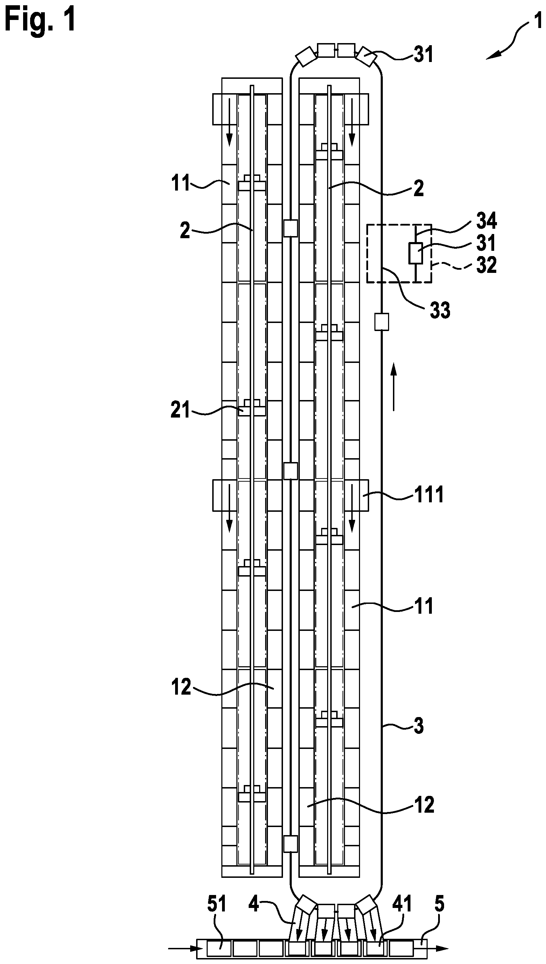

Ein Kommissioniersystem 1 gemäß einem Ausführungsbeispiel der Erfindung ist in Fig. 1 dargestellt. Es weist zwei Paare von jeweils einem ersten Regal 11 auf, das parallel zum zweiten Regal 12 verläuft. Jedes erste Regal 11 weist zwei Bedienbereiche 111 auf. Zwischen den beiden Regalen 11, 12 jeden Paares ist jeweils eine erste Führungsschiene 2 angeordnet. Entlang jeder ersten Führungsschiene 2 sind jeweils vier Regalbediengeräte 21 verfahrbar angeordnet. Diese werden mittels WLAN gesteuert.

Jedes der Regalbediengeräte 21 ist dabei innerhalb eines Bewegungsbereiches verfahrbar, der in Fig. 1 durch eine gestrichelte Linie begrenzt wird. Eine zweite Führungsschiene 3 verläuft zwischen den zweiten Regalen 12 der beiden Regalpaare. Anschließend formt sie einen Bogen um eines der Regalpaare herum, verläuft auf der anderen Seite eines der Regalpaare ebenfalls parallel zu diesem und formt dann einen weiteren Bogen, der am Anfang des Abschnitts der zweiten Führungsschiene 3 endet, welcher zwischen den beiden Regalpaaren verläuft. Die zweite Führungsschiene 3 ist somit in sich geschlossen. Zwölf Transportgeräte 31 sind auf der zweiten Führungsschiene 3 so angeordnet, dass sie gegen den Uhrzeigersinn entlang dieser verfahrbar sind. In ihrem ersten bogenförmigen Bereich passiert die zweite Führungsschiene 3 einen Ausgabebereich 4, welcher in Form von vier Rutschen ausgeführt ist. Jede Rutsche endet in einem Speicherbehälter 41. Die Speicherbehälter 41 sind oberhalb eines als Rollenförderer ausgeführten Fördermittels 5 angeordnet, auf dem Verpackungsbehälter 51 transportiert werden. In einem Transferbereich 32 ist parallel zu einem Abschnitt 33 der zweiten Führungsschiene 3 ein Ersatzabschnitt 34 angeordnet. Der Abschnitt 33 und der Ersatzabschnitt 34 können so verschoben werden, dass der Ersatzabschnitt 34 die Position des Abschnitts 33 einnimmt. Ein zusätzliches Transportgerät 31, das auf dem Ersatzabschnitt 34 angeordnet ist, kann auf diese Weise auf die zweite Führungsschiene aufgebracht werden. Anschließend bewegt es sich gemeinsam mit den übrigen Transportgeräten 31 gegen den Uhrzeigersinn auf der zweiten Führungsschiene 3.

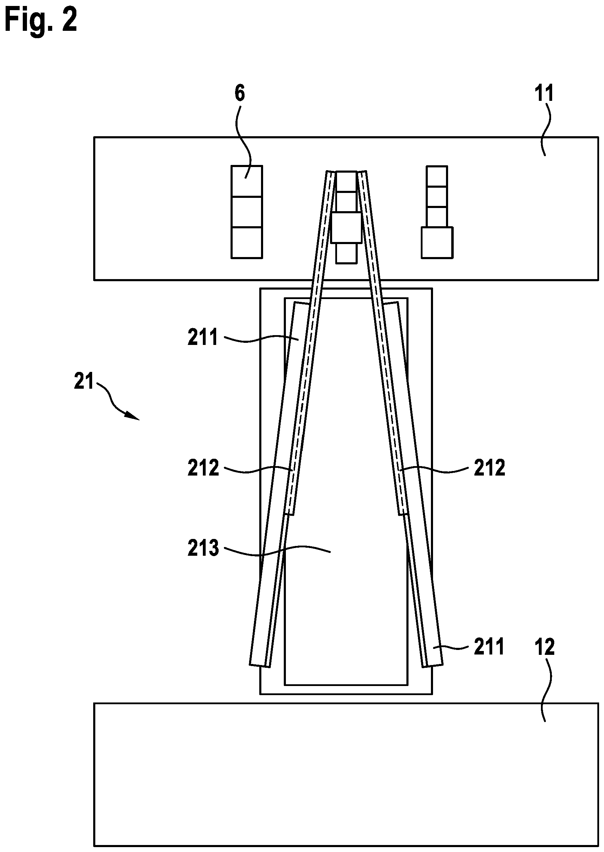

In Fig. 2 ist eines der Regalbediengeräte 21 dargestellt, während es mehrere Objekte 6 aus einem Lagerfach eines der ersten Regale 11 greift. Das Regalbediengerät 21 weist zwei drehbare Führungen 211 auf. Jede Führung verfügt über einen ausfahrbaren Greifarm 212. Die Greifarme 212 können in das Lagerfach des ersten Regals 11 ausgefahren werden. Indem die Führungen 211 und damit auch die Greifarme 212 aufeinander zu gedreht werden, ist ein sicheres Greifen der Objekte 6 möglich. Anschließend können die Objekte 6 durch Einziehen der Greifarme 212 auf ein Förderband 213 des Regalbediengeräts 21 gezogen werden, so sie je nach Bedarf auf dem Regalbediengerät weiterverfahren werden können. Die Greifarme 212 sind nicht nur in Richtung des ersten Regals 11, sondern auch in Richtung des zweiten Regals 12 ausfahrbar. Auf diese Weise kann das Regalbediengerät Objekte 6 aus jedem der beiden Regale 11, 12, zwischen denen es angeordnet ist, auslagern und auch in diese einlagern.

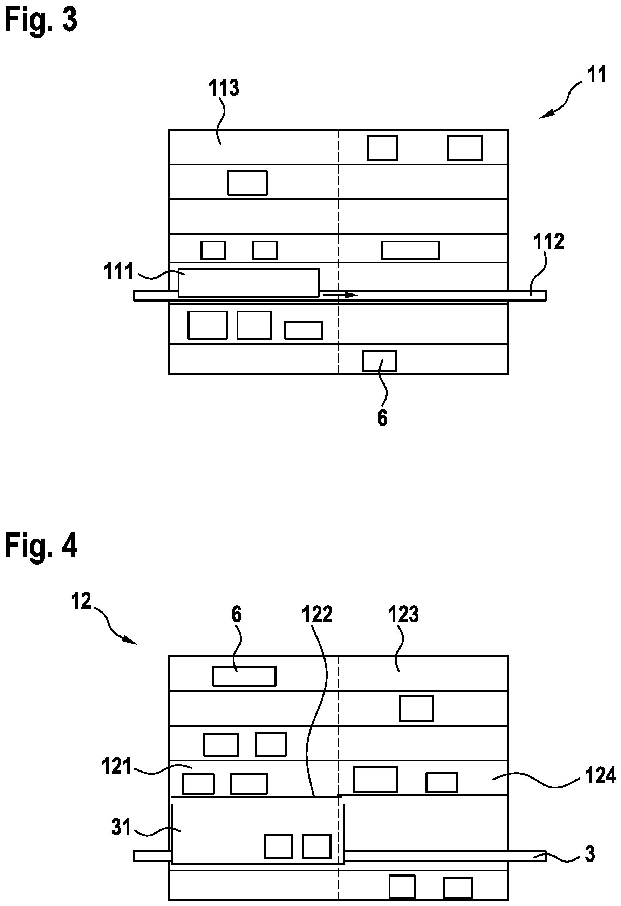

Fig. 3 zeigt eine Ansicht eines Teils eines ersten Regals 11 von der Außenseite des Kommissioniersystems 1. Dieses weist auf einer Ebene einen Bedienbereich 111 auf, durch den ein Benutzer Objekte 6 auf ein Förderband 112 legen kann. Die Objekte werden anschließend von dem Förderband 112 aus dem Bedienbereich 111 heraus verfahren. Dann können sie von einem der Regalbediengeräte 21 gegriffen und in einem Lagerfach 113 in dem ersten Regal 11 oder in einem der Lagerfächer des zweiten Regals 12 abgelegt werden.

Fig. 4 zeigt einen Ausschnitt aus einem der zweiten Regale 12. In einer Ebene des zweiten Regals 12 befindet sich ein Speicherfach 121 mit einem verschiebbaren Boden 122. In der unmittelbar darunterliegenden Ebene verläuft seitlich versetzt zum zweiten Regal 12 die zweite Führungsschiene 3. Eines der Transportgeräte 31 ist unter dem Speicherfach 121 platziert, ohne dass der Boden 122 verschoben wäre. Dabei erstreckt sich das Transportgerät 31 unter das Speicherfach 121. Wenn beim Verfahren des Transportgeräts 31 unter das Speicherfach 121 eine nicht dargestellte Seitenklappe des Transportgeräts 31 teilweise geöffnet ist, so wird beim Verfahren des Transportgeräts 31 der Boden 122 beiseitegeschoben, sodass Objekte 6, die sich im Speicherfach 121 befinden, in das Transportgerät 31 hinabfallen. Während in anderen Ebenen des zweiten Regals 12 Lagerfächer 123 vorgesehen sind, befindet sich unmittelbar neben dem Speicherfach 121 in derselben Ebene ein Ablagebereich 124. Der Boden 122 wird, wenn er vom Transportgerät 31 verschoben wird, unter den Ablagebereich 124 bewegt. Bei geöffnetem Boden 122 können Objekte 6, die sich im Ablagebereich 124 befinden, mittels der ausgefahrenen Greifarme 212 eines Regalbediengeräts 21 aus dem Ablagebereich 124 in das Speicherfach 121 geschoben werden, so dass sie durch dessen offenen Boden in das Transportgerät 31 hinabfallen. Auf diese Weise kann der in Fig. 4 dargestellte Abschnitt des zweiten Regals 12 in der Ebene des Speicherfachs 121 über seine gesamte Breite zum Zwischenlagern von Objekten verwendet werden, die mit dem Transportgerät 31 weitertransportiert werden sollen. Im weiteren Verlauf des zweiten Regals 12 folgen in dieser Ebene abwechselnd Speicherfächer 121 und damit verbundene Ablagebereiche 124 aufeinander, so dass diese Ebene vollständig zum Zwischenlagern von Objekten 6 verwendet werden kann, welche aus dem Kommissioniersystem 1 ausgelagert werden sollen.

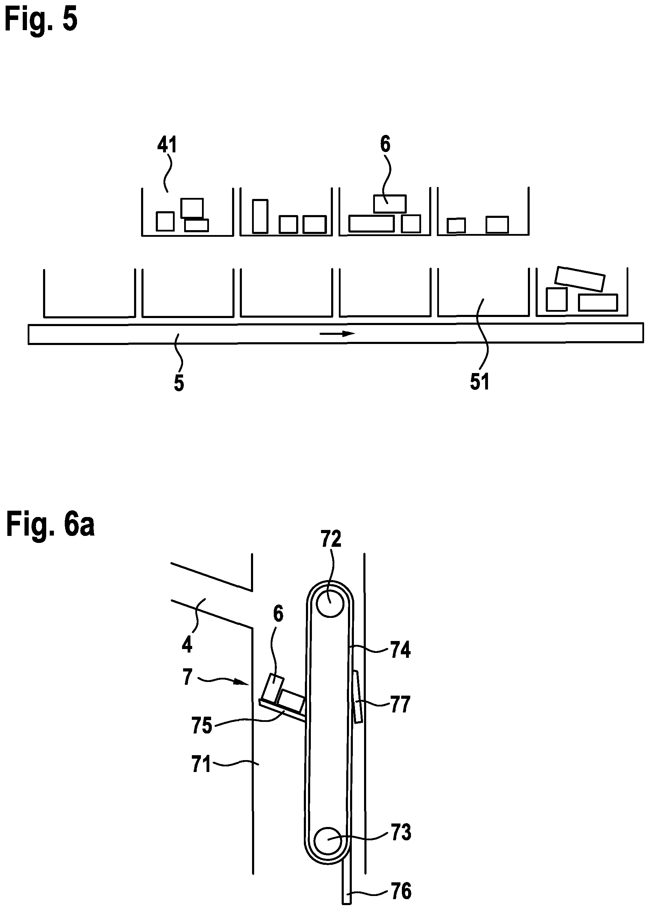

In Fig. 5 ist dargestellt wie zahlreiche Objekte 6 in den Speicherbehältern 41 gelagert sind. Das Fördermittel 5 verfährt Verpackungsbehälter 51 in Pfeilrichtung unter den Speicherbehältern 41 entlang. Ein Speicherbehälter 41, das mit allen dafür vorgesehenen Objekten 6 befüllt wurde, kann in den darunter befindlichen Verpackungsbehälter 51 ausgeleert werden. Dieser wird dann mittels des Fördermittel 5 weitertransportiert und versandfertig gemacht.

Zum Befüllen des Kommissioniersystems 1 werden Objekte 6 manuell in einen der Bedienbereiche 111 eingegeben. Dann werden sie mit dem Förderband 112, in der in Fig. 1 mit einem Pfeil dargestellten Richtung so weit in Richtung auf den nächsten Bedienbereich 111 verfahren, bis sie sich im Zugriffsbereichs eines Regalbediengeräts 21 befinden, welches das Objekt 6 im Rahmen einer dynamischen Lagerhaltung in das Kommissioniersystem 1 einlagern soll. Dieses greift das Objekt mittels seiner Greifarme 212 und transportiert auf sein Förderband 213. Dann wird das Regalbediengerät 21 entlang seiner ersten Führungsschiene 2 horizontal und vertikal so weit verfahren, bis es ein Lagerfach 113 seines ersten Regals 11 oder ein Lagerfach 123 seines zweiten Regals 12 erreicht hat, in welches das Objekt 6 eingelagert werden soll. Dort wird es mittels der Greifarme 212 abgelegt.

Wenn in einem Computerprogramm des Kommissioniersystems 1 eine Bestellung mehrerer Objekte 6 erfasst wird, so beginnen in einem Ausführungsbeispiel des erfindungsgemäßen Verfahrens die Regalbediengeräte 21 diese Objekte 6 aus den Lagerfächern 113, 123 in Speicherfächer 121 und daran angrenzende Ablagebereiche 124 umzulagern. Dabei legt ein Regalbediengerät 21 soweit möglich alle von ihm gegriffenen Objekte 6 innerhalb seines Bewegungsbereiches in einem einzigen Speicherfachs 121 und dem daran angrenzenden Ablagebereich 124 ab. Sobald ein Regalbediengerät 21 alle aus seinem Bewegungsbereich angeforderten Objekte 6 gesammelt hat, öffnet das nächste an diesem Bewegungsbereich vorbeifahrende leere Transportgerät 31 den Boden 122 dieses Speicherfachs 121, so dass alle darin abgelegten Objekte 6 in das Transportgerät 31 hinabfallen. Falls auch Objekte 6 in dem danebenliegenden Ablagebereich 124 abgelegt wurden, so werden diese bei geöffnetem Boden 122 von Regalbediengerät 21 mittels seiner Greifarme 212 in das Speicherfach 121 hinübergeschoben, so dass auch sie in das Transportgerät 31 hinabfallen. Wenn das so befüllte Transportgerät 31 den Ausgabebereich 4 erreicht, öffnet es dort an jener Rutsche, die in das dieser Bestellung zugeordnete Speicherbehälter 41 führt, seine Seitenklappe, so dass alle in dem Transportgerät 31 befindlichen Objekte in den Speicherbehälter 41 hineinfallen. Dieser Speicherbehälter 41 wird nun von weiteren vorbeifahrenden Transportgeräten 31, welche ebenfalls Objekte 6 enthalten, die dieser Bestellung zugeordnet sind, weiter befüllt, bis alle Objekte 6 der Bestellung sich in diesem Speicherbehälter 41 gesammelt haben. Dann wird der Speicherbehälter 41 in einen Verpackungsbehälter 51 geleert und dieser mittels des Fördermittels 5 zum Endversand an die bestellende Apotheke weitertransportiert. Die entleerten Transportgeräte 31 folgen der zweiten Führungsschiene 3 an der Außenseite des Regalbediengeräts 1 entlang und fahren dann wieder zwischen den beiden zweiten Regalen 12 in das Kommissioniersystem 1 hinein, um weitere Objekte 6 einzusammeln.

Das beschriebene Ausführungsbeispiel des Auslagerungsverfahrens ermöglicht in Verbindung mit dem beschriebenen Ausführungsbeispiel des Kommissioniersystems eine schnelle Auslagerung von Objekten 6 in die Verpackungsbehälter 51. Dabei wird ausgenutzt, dass durch das Zwischenlagern der Objekte 6 in den Speicherfächern 121 und in den Speicherbehältern 41 die Regalbediengeräte 21 und die Transportgeräte 31 gleichzeitig am Auslagern von Objekten 6 unterschiedlicher Bestellungen arbeiten können.

In einem anderen Ausführungsbeispiel des Kommissioniersystems sind die Speicherbehälter 41 durch die in den Fig. 6a bis 6c dargestellten Speicherbehälter 7 ersetzt. Der Ausgabebereich 4 mündet dort in einen vertikalen Schacht 71, in dem zwei Antriebsrollen 72, 73 angeordnet sind. Um die Antriebsrollen 72, 73 läuft ein Transportmittel 74 um, bei dem es sich vorliegend um ein Kettenpaar handelt. Drei Böden 75, 76, 77 sind so an dem Kettenpaar befestigt, dass jeweils ein Ende einer Bodenkante mit einer Kette verbunden ist. Die Antriebsrollen drehen das Transportmittel 74 gegen den Urzeigersinn, so dass die Böden 75, 76, 77 sich auf der dem Ausgabebereich 4 zugewandten Seite des Transportmittels 74 nach unten bewegen und sich auf der dem Ausgabebereich 4 abgewandten Seite des Transportmittels 74 nach oben bewegen. Die Befestigung erfolgt so, dass die Böden auf der dem Ausgabebereich 4 zugewandten ersten Seite des Transportmittels 74 in einem Winkel von 20° zu dem Transportmittel 74 blockiert werden. Objekte 6, die aus dem Ausgabebereich 4 auf einen Boden gelangen, rutschen so in Richtung des Transportmittels. Auf der zweiten Seite des Transportmittels 74 ist diese Blockierung aufgehoben.

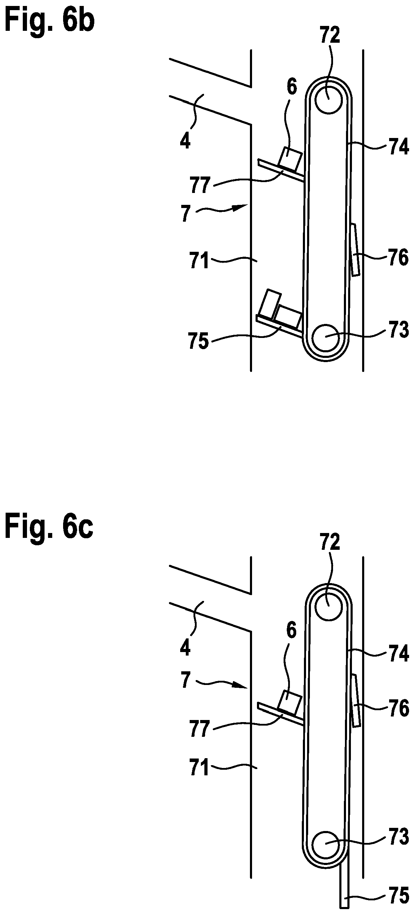

In der Darstellung in Fig. 6a befindet sich nur ein erster Boden 75 auf der ersten Seite. Objekte 6 können von Transportgeräten 31 über den Ausgabebereich 4 auf diesem abgelegt werden. Wenn alle Objekte 6, die zur Ausgabe in einen gemeinsamen Verpackungsbehälter 51 vorgesehen sind, auf dem ersten Boden 75 abgelegt wurden, so wird das Transportmittel 74 so weit gedreht, bis ein weiterer Boden 77 zum Befüllen bereit ist. Dabei wird der erste Boden 75 nach unten verfahren, so dass die in Fig. 6b dargestellte Position der Böden 75, 76, 77 erreicht wird. Die Objekte 6 auf dem ersten Boden 75 werden dabei noch nicht freigegeben. Erst wenn ein Verpackungsbehälter 51, der zur Aufnahme der Objekte 6 auf dem ersten Boden 75 vorgesehen ist, von dem Fördermittel 5 unter den Schacht 71 bewegt wurde, wird das Transportmittel 74 weitergedreht, so dass die in Fig. 6c dargestellte Position erreicht wird. Dabei stürzen die auf dem ersten Boden 75 gelagerten Objekte 6 in den Verpackungsbehälter 51 herab.

Der Speicherbehälter 7 in diesem Ausführungsbeispiel des Kommissioniersystems ermöglicht es, jeweils eine erste Gruppe von Objekten 6 zu sammeln, während eine zweite Gruppe von Objekten 6 zur Abgabe in einen Verpackungsbehälter 51 bereitgehalten wird.

## Patentansprüche

1. Kommissioniersystem (1), aufweisend
- mindestens ein Regal (11, 12), das mehrere Lagerfächer (113, 123) aufweist,
- mindestens ein Regalbediengerät (21), das parallel zu zumindest einem Abschnitt des Regals (11, 12) verfahrbar angeordnet ist, und das eingerichtet ist, um Objekte (6) in den Lagerfächern (113, 123) abzulegen und aus den Lagerfächern (113, 123) zu entnehmen,
- mehrere Speicherfächer (121), die eingerichtet sind, um von dem Regalbediengerät (21) befüllt zu werden,
- mindestens ein Transportgerät (31),
- mindestens eine erste Führungsschiene (2), die parallel zu zumindest einem Abschnitt des Regals (11, 12) angeordnet ist und entlang welcher das mindestens eine Regalbediengerät (21) verfahrbar angeordnet ist, und
- eine zweite Führungsschiene (3), entlang welcher das Transportgerät (31) verfahrbar angeordnet,
wobei in einem Abschnitt die mindestens eine erste Führungsschiene (2) parallel zu der zweiten Führungsschiene (3) verläuft, wobei zwischen diesen Führungsschienen ein Regal (12) angeordnet ist, das mindestens ein Speicherfach (121) und mehrere Lagerfächer (123) enthält, oder wobei in dem Abschnitt die zweite Führungsschiene in diesem Regal (12) verläuft, **dadurch gekennzeichnet, dass** das Transportgerät sich unter die Speicherfächer erstreckt und eingerichtet ist, um einen Boden eines Speicherfachs so zu verschieben, dass in dem Speicherfach befindliche Objekte in das Transportgerät fallen.

2. Kommissioniersystem (1) nach Anspruch 1, **dadurch gekennzeichnet, dass** die zweite Führungsschiene (3) in sich geschlossen ist.

3. Kommissioniersystem (1) nach Anspruch 2, **dadurch gekennzeichnet, dass** die zweite Führungsschiene (3) mindestens einen Transferbereich (32) aufweist, in dem ein Abschnitt (33) der zweiten Führungsschiene (3) so ausgebildet ist, dass er aus der zweiten Führungsschiene (3) entfernt werden kann und dabei durch einen parallel zu der zweiten Führungsschiene (3) angeordneten Ersatzabschnitt (34) derselben Länge ersetzt werden kann.

4. Kommissioniersystem (1) nach einem der Ansprüche 1 bis 3, **dadurch gekennzeichnet, dass** mindestens ein Speicherfach (121) so neben einem Ablagebereich (124) angeordnet ist, dass in dem Ablagebereich (124) befindliche Objekte (6) mittels des Regalbediengeräts (21) in das Speicherfach (121) verschiebbar sind.

5. Kommissioniersystem (1) nach einem der Ansprüche 1 bis 4, **dadurch gekennzeichnet, dass** es mehrere Speicherbehälter (41, 7) aufweist, wobei das Transportgerät (31) eingerichtet ist, um seinen Inhalt in einen der Speicherbehälter (41, 7) zu entleeren.

6. Kommissioniersystem (1) nach Anspruch 5, **dadurch gekennzeichnet, dass** sie ein Fördermittel (5) aufweist, auf dem Verpackungsbehälter (51) transportierbar sind, wobei die Speicherbehälter (41, 7) so angeordnet sind, dass sie in die Verpackungsbehälter (51) entleerbar sind.

7. Kommissioniersystem (1) nach Anspruch 5 oder 6, **dadurch gekennzeichnet, dass** die Speicherbehälter (7) jeweils einen Schacht (71) aufweisen, in dem mehrere Böden (75, 76, 77) verfahrbar angeordnet sind, wobei die Böden (75, 76, 77) in einer Lagerposition, die zur Aufnahme von Objekten (6) geeignet ist, auf einer Seite eines Transportmittels (74) nach unten verfahrbar angeordnet sind und in einer Transportposition auf der anderen Seite des Transportmittels (74) nach oben verfahrbar angeordnet sind.

8. Verfahren zur Auslagerung von Objekten (6) aus einem Kommissioniersystem (1), umfassend die folgenden Schritte:
- Entnehmen mindestens eines Objektes (6) aus einem Lagerfach (113, 123) des Kommissioniersystems (1) mittels eines Regalbediengeräts (21),
- Ablagen des mindestens einen Objektes (6) in einem Speicherfach (121) des Kommissioniersystems (1),
- Verfahren eines Transportgeräts (31) an das Speicherfach (121) heran, so dass sich das Transportgerät (31) unter das Speicherfach (121) erstreckt,
- Entleeren des Speicherfachs (121) in das Transportgerät (31), indem das Transportgerät einen Boden (122) des Speicherfachs (121) so verschiebt, dass in dem Speicherfach (121) befindliche Objekte (6) in das Transportgerät (31) fallen,
- Verfahren des Transportgeräts (31) zu einem Ausgabebereich (4), und
- Entleeren des Transportgeräts (31) in den Ausgabebereich (4).

9. Verfahren nach Anspruch 8, **dadurch gekennzeichnet, dass** beim Entleeren des Speicherfachs (121) mindestens ein Objekt (6) aus einem Ablagebereich (124), der angrenzend zu dem Speicherfach (121) angeordnet ist, mittels Greifarmen (212) des Regalbediengeräts (21) in das Transportgerät (31) geschoben wird.

10. Verfahren nach Anspruch 8 oder 9, **dadurch gekennzeichnet, dass** mehrere Speicherfächer (121) in das Transportgerät (31) entleert werden, bevor das Transportgerät (31) in den Ausgabebereich (4) entleert wird.

11. Verfahren nach einem der Ansprüche 8 bis 10, **dadurch gekennzeichnet, dass** in dem Ausgabebereich (4) mehrere Speicherbehälter (41, 7) angeordnet sind, wobei jedes Transportgerät (31) in einen der Speicherbehälter (41, 7) entleert wird.

12. Verfahren nach Anspruch 11, **dadurch gekennzeichnet, dass** ein Speicherbehälter (41, 7) in einen Verpackungsbehälter (51) entleert wird, nachdem ein oder mehrere Transportgeräte (31) in den Speicherbehälter (41, 7) entleert wurden.

13. Verfahren nach einem der Ansprüche 8 bis 12, **dadurch gekennzeichnet, dass** das Kommissioniersystem (1) ein Kommissioniersystem (1) nach einem der Ansprüche 1 bis 9 ist.

## Claims

1. Picking system (1), having
- at least one shelf (11, 12) that has several repository compartments (113, 123),
- at least one shelf operating device (21), which is arranged shiftably in parallel to at least one section of the shelf (11, 12) and which is set up to deposit objects (6) in the repository compartments (113, 123) and to take them out of the repository compartments (113, 123),
- several storage compartments (121), which are set up to be filled by the shelf operating device (21),
- at least one transportation device (31),
- at least one first guiding rail (2), which is arranged in parallel to at least one section of the shelf (11, 12) and along which the at least one shelf operating device (21) is shiftably arranged, and
- a second guiding rail (3), along which the transportation device (31) is shiftably arranged,
wherein, in one section, the at least one first guiding rail (2) runs parallel to the second guiding rail (3), wherein a shelf (12) is arranged between these guiding rails, said shelf (12) containing at least one storage compartment (121) and several repository compartments (123), or wherein, in the section, the second guiding rail runs in this shelf (12), **characterised in that** the transportation device extends below the storage compartments and is set up to move a base of a storage compartment in such a way that objects in the storage compartment fall into the transportation device.

2. Picking system (1) according to claim 1, **characterised in that** the second guiding rail (3) is inherently closed.

3. Picking system (1) according to claim 2, **characterised in that** the second guiding rail (3) has at least one transfer region (32), in which a section (33) of the second guiding rail (3) is formed in such a way that it can be removed from the second guiding rail (3) and, here, can be replaced by a replacement section (34) of the same length arranged in parallel to the second guiding rail (3).

4. Picking system (1) according to one of claims 1 to 3, **characterised in that** at least one storage compartment (121) is arranged next to a delivery region (124) in such a way that objects (6) in the delivery region (124) can be moved into the storage compartment (121) by means of the shelf operating device (21).

5. Picking system (1) according to one of claims 1 to 4, **characterised in that** it has several storage containers (41, 7), wherein the transportation device (31) is set up to empty its contents into one of the storage containers (41, 7).

6. Picking system (1) according to claim 5, **characterised in that** it has conveying means (5), on which packaging containers (51) can be transported, wherein the storage containers (41, 7) are arranged in such a way that they can be emptied into the packaging containers (51).

7. Picking system (1) according to claim 5 or 6, **characterised in that** the storage containers (7) each have a shaft (71), in which several bases (75, 76, 77) are shiftably arranged, wherein the bases (75, 76, 77) are arranged shiftably downwards on a side of a transportation means (74) in a repository position, which is suitable for receiving objects (6), and are arranged shiftably upwards on a different side of the transportation means (74) in a transportation position.

8. Method for removal of objects (6) from a picking system (1), comprising the following steps:
- removing at least one object (6) from a repository compartment (113, 123) of the picking system (1) by means of a shelf operating device (21),
- depositing the at least one object (6) in a storage compartment (121) of the picking system (1),
- shifting a transportation device (31) onto the storage compartment (121), such that the transportation device (31) extends below the storage compartment (121),
- emptying the storage compartment (121) into the transportation device (31), by the transportation device moving a base (122) of the storage compartment (121) in such a way that objects (6) in the storage compartment (121) fall into the transportation device (31),
- shifting the transportation device (31) to an output region (4), and
- emptying the transportation device (31) into the output region (4).

9. Method according to claim 8, **characterised in that**, when emptying the storage compartment (121), at least one object (6) is pushed out of a delivery region (124), which is arranged adjacent to the storage compartment (121), into the transportation device (31) by means of gripping arms (212) of the shelf operating device (21).

10. Method according to claim 8 or 9, **characterised in that** several storage compartments (121) are emptied into the transportation device (31) before the transportation device (31) is emptied into the output region (4).

11. Method according to one of claims 8 to 10, **characterised in that**, in the output region (4), several storage containers (41, 7) are arranged, wherein each transportation device (31) is emptied into one of the storage containers (41, 7).

12. Method according to claim 11, **characterised in that** a storage container (41, 7) is emptied into a packaging container (51) after one or more transportation devices (31) have been emptied into the storage container (41, 7).

13. Method according to one of claims 8 to 12, **characterised in that** the picking system (1) is a picking system (1) according to one of claims 1 to 9.

## Revendications

1. Système de préparation de commandes (1) présentant
- au moins une étagère (11, 12) qui présente plusieurs compartiments de stockage (113, 123),
- au moins un appareil de manoeuvre des étagères (21), qui est disposé en pouvant se déplacer parallèlement à au moins une section de l'étagère (11, 12) et qui est conçu pour déposer des objets (6) dans les compartiments de stockage (113, 123) et pour les prélever à partir des compartiments de stockage (113, 123),
- plusieurs compartiments d'approvisionnement (121), qui sont conçus pour être remplis par l'appareil de manoeuvre des étagères (21),
- au moins un appareil de transport (31),
- au moins un premier rail de guidage (2), qui est disposé parallèlement à au moins une section de l'étagère (11, 12) et le long duquel l'au moins un appareil de manoeuvre des étagères (21) est disposé en pouvant se déplacer, et
- un deuxième rail de guidage (3), le long duquel l'appareil de transport (31) est disposé en pouvant se déplacer,
où, dans une section, l'au moins un premier rail de guidage (2) s'étend parallèle au deuxième rail de guidage (3), où une étagère (12), qui contient au moins un compartiment d'approvisionnement (121) et plusieurs compartiments de stockage (123), est disposée entre ces rails de guidage, ou où le deuxième rail de guidage s'étend dans cette étagère (12) sur la section, **caractérisé en ce que** l'appareil de transport s'étend en-dessous des compartiments d'approvisionnement et est conçu pour faire coulisser le fond d'un compartiment d'approvisionnement de telle manière que des objets se trouvant dans le compartiment d'approvisionnement tombent dans l'appareil de transport.

2. Système de préparation de commandes (1) selon la revendication 1, **caractérisé en ce que** le deuxième rail de guidage (3) se referme sur lui-même.

3. Système de préparation de commandes (1) selon la revendication 2, **caractérisé en ce que** le deuxième rail de guidage (3) présente au moins une zone de transfert (32) dans laquelle une section (33) du deuxième rail de guidage (3) est conçue de telle manière qu'elle puisse être retirée du deuxième rail de guidage (3) et être ainsi remplacée par une section de remplacement (34) de la même longueur disposée parallèlement au deuxième rail de guidage (3).

4. Système de préparation de commandes (1) selon l'une des revendications 1 à 3, **caractérisé en ce qu'**au moins un compartiment d'approvisionnement (121) est disposé à côté d'une zone de dépôt (124) de telle manière que des objets (6) se trouvant dans la zone de dépôt (124) peuvent être déplacés dans le compartiment d'approvisionnement (121) au moyen de l'appareil de manoeuvre des étagères (21).

5. Système de préparation de commandes (1) selon l'une des revendications 1 à 4, **caractérisé en ce qu'**il présente plusieurs récipients d'approvisionnement (41, 7), où l'appareil de transport (31) est conçu de telle manière qu'il vide son contenu dans l'un des récipients d'approvisionnement (41, 7).

6. Système de préparation de commandes (1) selon la revendication 5, **caractérisé en ce qu'**il présente un moyen de transport (5), sur lequel des récipients d'emballage (51) peuvent être transportés, où les récipients d'approvisionnement (41, 7) sont disposés de telle manière qu'ils peuvent être vidés dans les récipients d'emballage (51).

7. Système de préparation de commandes (1) selon la revendication 5 ou la revendication 6, **caractérisé en ce que** les récipients d'approvisionnement (7) présentent respectivement une cage (71) dans laquelle plusieurs fonds (75, 76, 77) peuvent être agencés de manière mobile, où les fonds (75, 76, 77) sont disposés de manière mobile vers le bas sur un côté d'un moyen de transport (74), dans une position de stockage qui est appropriée pour la réception d'objets (6) et sont disposés de manière mobile vers le haut sur l'autre côté du moyen de transport (74) dans une position de transport.

8. Procédé de déchargement d'objets (6) à partir d'un système de préparation de commandes (1), comprenant les étapes suivantes :
- le prélèvement d'au moins un objet (6) hors d'un compartiment de stockage (113, 123) du système de préparation de commandes (1) au moyen d'un appareil de manoeuvre d'étagères (21),
- le dépôt de l'au moins un objet (6) dans un compartiment d'approvisionnement (121) du système de préparation de commandes (1),
- le déplacement d'un appareil de transport (31) jusqu'au compartiment d'approvisionnement (121) de sorte que l'appareil de transport (31) s'étend en-dessous du compartiment d'approvisionnement (121),
- la décharge du compartiment d'approvisionnement (121) dans l'appareil de transport (31) en ce que l'appareil de transport déplace un fond (122) du compartiment d'approvisionnement (121) de telle manière que des objets (6) se trouvant dans le compartiment d'approvisionnement (121) tombent dans l'appareil de transport (31),
- le déplacement de l'appareil de transport (31) vers une zone de livraison (4) et
- la décharge de l'appareil de transport (31) dans la zone de livraison (4).

9. Procédé selon la revendication 8, **caractérisé en ce que**, lors de la décharge du compartiment d'approvisionnement (121), au moins un objet (6) est poussé hors d'une zone de dépôt (124), qui est disposée adjacent au compartiment d'approvisionnement (121), au moyen de bras de préhension (212) de l'appareil de manoeuvre d'étagères (21) dans l'appareil de transport (31).

10. Procédé selon la revendication 8 ou la revendication 9, **caractérisé en ce que** plusieurs compartiments d'approvisionnement (121) sont déchargés dans l'appareil de transport (31) avant que l'appareil de transport (31) ne soit déchargé dans la zone de livraison (4).

11. Procédé selon l'une des revendications 8 à 10, **caractérisé en ce que** plusieurs récipients d'approvisionnement (41, 7) sont disposés dans la zone de livraison (4), où chaque appareil de transport (31) est déchargé dans un des récipients d'approvisionnement (41, 7).

12. Procédé selon la revendication 11, **caractérisé en ce qu'**un récipient d'approvisionnement (41, 7) est déchargé dans un récipient d'emballage (51) après qu'un ou plusieurs appareils de transport (31) aient été déchargés dans le compartiment d'approvisionnement (41, 7).

13. Procédé selon l'une des revendications 8 à 12, **caractérisé en ce que** le système de préparation de commandes (1) est un système de préparation de commandes (1) selon l'une des revendications 1 à 9.
